# EUROPÄISCHE PATENTSCHRIFT

(11) **EP 0 430 383 B1**
(45) Veröffentlichungstag und Bekanntmachung des Hinweises auf die Patenterteilung: **03.11.1993**
(21) Anmeldenummer: 90250276.4
(22) Anmeldetag: 05.11.1990
(51) Int. Cl.: C23C 4/12, F16L 15/00

(54) **Verfahren und Vorrichtung zum Aufbringen eines metallischen Überzuges auf die Gewindeabschnitte miteinander kraftverschraubbarer Kunststoffrohre.**
Process and apparatus for metallic coating of the threaded ends of connectable plastic pipes.
Procédé et dispositif pour le revêtement métallique d'extrémités filetées de tuyaux en matière plastique assemblables.

(30) Priorität: 16.11.1989 DE 3938362; 16.11.1989 NL 8902840
(43) Veröffentlichungstag der Anmeldung: 05.06.1991
(73) Patentinhaber: MANNESMANN Aktiengesellschaft, 40027 Düsseldorf (DE); WAVIN B.V., NL-8000 AD Zwolle (NL)
(72) Erfinder: Quadflieg, Erich, Dr.-Ing., W-4150 Krefeld (DE); Heestermans, Martinus C.J., NL-8034 RA Zwolle (NL)
(74) Vertreter: Meissner, Peter E., Dipl.-Ing.

(56) Entgegenhaltungen:
- EP-A- 0 292 998
- US-A- 3 831 213
- PATENT ABSTRACTS OF JAPAN, Band 10, Nr. 156 (C-351)[2212], 5. Juni 1986; & JP-A-61 9565
- PT WERKTUIGBOUW, Band 41, Nr. 11, November 1986, Seiten 41-44, Rijswijk, NL; "Vlamspuittechniek maakt kunststoffen duurzamer"
- PATENT ABSTRACTS OF JAPAN, vol. 12, no. 103 (C-485)[2950], 5. April 1988; & JP-A-62 230 962

## Beschreibung

Die Erfindung betrifft ein Verfahren und eine Vorrichtung zum Aufbringen eines metallischen Überzuges auf die Gewindeabschnitte miteinander kraftverschraubbarer Kunststoffrohre gemäß den Ansprüchen 1 und 10.

Bei der Erdöl- und Erdgasgewinnung muß seit einigen Jahren mit zunehmender Lagererschöpfung der leicht ausbeutbaren Felder in immer größeren Tiefen gebohrt und auch als schwierig einzustufende Felder erschlossen werden, wobei der Anteil der stark korrosiv wirkenden Elemente in dem zu fördernden Medium wie CO₂, H₂S und Chloride allein und in Kombination mehr und mehr zunimmt. Hinzu kommt noch, daß bei der Rohölforderung es üblich geworden ist, das bei der Abscheidung des Öles anfallende Salzwasser ganz oder teilweise in das Bohrloch zurückzupressen, um den erforderlichen Lagerdruck aufrechtzuerhalten. Diesem massiven Korrosionsangriff können die aus üblichem Kohlenstoffstahl gefertigten Rohre nicht standhalten und es gibt eine Vielzahl von Vorschlägen, wie man dieses Problem lösen kann. Eine der Möglichkeiten besteht darin, das Rohr innen vollständig mit einem korrosionsfesten Material, z. B. Kunststoff auszukleiden oder korrosionswiderstandsfähige hochlegierte Stähle mit hohen Gehalten an Chrom, Nickel oder ähnlichen Elementen einzusetzen. Die Auskleidung von Kohlenstoffstahlrohren mit einem sogenannten Inliner aus Kunststoff ist sehr problematisch, da wegen der sehr unterschiedlichen Wärmeausdehnungskoeffizienten es Schwierigkeiten bereitet, die beiden Rohre miteinander zu verklammern und die in den meisten Fällen umgebördelten Enden der eingezogenen Kunststoffrohre bei Temperaturwechselbeanspruchung zu Anrissen neigen. Die alternativ verwendeten korrosionswiderstandsfesten hochlegierten Stahlrohre sind sehr teuer, da der Legierungsgehalt der sehr teueren Elemente wie Chrom und Nickel sehr hoch ist.

Vor diesem Hintergrund ist der Einsatz von reinen Kunststoffrohren, insbesondere faserverstärkten Kunststoffrohren, mehr und mehr interessant geworden, da sie erheblich billiger sind als die aus hochlegiertem Stahl hergestellten Rohre und einen hohen Korrosionswiderstand gegen die bei der Ölförderung auftretenden aggressiven Medien aufweisen. Da es bei der Erdöl- und Erdgasgewinnung üblich ist, die Rohre nach Gebrauch soweit als möglich wiederzuverwenden, werden die Enden mit einem Gewindeabschnitt versehen, damit sie direkt oder über eine Muffe miteinander verschraubbar sind. Diese Verbindungstechnik wird in gleicher Weise auch bei den Kunststoffrohren angewandt. Dabei zeigt es sich, daß insbesondere bei den faserverstärkten Kunststoffrohren in vielen Fällen eine Entschraubung ohne Beschädigung des Gewindes nicht möglich war. In einigen Fällen ging dabei sogar das Rohr selbst zu Bruch. Der Mechanismus der starken Verklammerung der beiden aufeinandergepreßten Gewindeflächen ist noch nicht restlos geklärt, aber es spricht vieles dafür, daß bedingt durch die hohe Flächenpressung in den Gewindegängen die Bindungskräfte zwischen den aufeinanderliegenden Kunststofflächen trotz des verwendeten Schmiermittels stark ansteigen. Das erforderliche Drehmoment zum Entschrauben steigt in den gleichen Maße an, so daß oberhalb eines kritischen Drehmomentes die Beschädigung des Gewindeabschnittes unausbleiblich ist.

Zur Überwindung dieses Problems ist deshalb vorgeschlagen worden (EP-A-0 292 998) die Gewindeabschnitte mit einer Metallschicht zu plattieren. Dabei wird die einem ersten Schritt der Gewindeabschnitt durch ein stromloses Naßverfahren verkupfert oder vernickelt und anschließend mittels Elektroplattieren eine Schicht aus Kupfer oder Nickel aufgebracht. Die erste aufgebrachte Schicht ist in den meisten Fällen sehr dünn ca. 0,3 µm, da sie nur dazu dient, den Gewindeabschnitt für das anschließende Elektroplattieren elektrisch leitend zu machen. Die mittels Elektroplattierung aufgebrachte Schicht liegt im Bereich zwischen 2 bis 5 µm bis maximal 40 µm, da oberhalb dieses Wertes die Haftfähigkeit der aufgebrachten Schicht erheblich abnimmt.

Das beschriebene Verfahren hat den großen Nachteil, daß das Plattieren viel Zeit, d. h. in der Größenordnung von 90 Minuten einschließlich der erforderlichen Vorbehandlung in Anspruch nimmt und deshalb sehr teuer ist. Außerden kann das Verfahren wegen der langen Bearbeitungszeit nicht direkt in der Fertigungslinie, sondern nur in einem Bypass durchgeführt werden. Im Hinblick auf die zunehmende Bedeutung des vorbeugenden Umweltschutzes ist außerdem darauf hinzuweisen, daß die Entsorgung der für die chemischen Bäder verwendeten aggressiven Medien schwierig der auch zunehmend teuer ist. Außerdem ist für die Aufstellung solcher Bäder, besonders in kritischen Wassereinzugsbereichen ein langwieriges Genehmigungsverfahren erforderlich.

Aufgabe der Erfindung ist es, ein Verfahren zum Aufbringen eines metallischen Überzuges auf die an den Enden als Zapfen- oder als Muffenelement ausgebildeten Gewindeabschnitte von miteinander Kraftverschraubbaren Kunststoffrohren, insbesondere faserverstärkten Kunststoffrohren anzugeben, das im Vergleich zum bekannten Verfahren schneller und billiger und in der Fertigungslinie leicht integrierbar und im Hinblick auf den vorbeugenden Umweltschutz vorteilhaft ist.

Diese Aufgabe wird mit den im kennzeichnenden Merkmal des Ansprüches 1 angegebenen Merkmalen gelöst. Vorteilhafte Weiterbildungen sowie eine Vorrichtung zur Durchführung des Verfahrens sind Bestandteil von Unteransprüchen.

Das erfindungsgemäße Verfahren zeichnet sich dadurch aus, daß statt des aufwendigen Plattierens der für das problemlose Verschrauben und Entschrauben von miteinander kraftverschraubbaren KunstStoffrohren erforderliche metallische Überzug aufgespritzt wird. Dabei treffen Tröpfchen eines Metalles oder einer Metallegierung mit hoher Geschwindigkeit und unter einem einstellbaren Auftreffwinkel unter Umgebungsdruck auf den betreffenden Gewindeabschnitt auf und bleiben auf der Oberfläche haften. Als Spritzverfahren kann wahlweise das an sich bekannte Lichtbogen-Metallspritzen oder das Drahtflammspritzen sowie das Plasmaspritzen angewandt werden. Beim Spritzvorgang wird das Rohr bzw. die Muffe gedreht und die Spritzvorrichtung und das Rohr bewegen sich dabei in Längsrichtung relativ zueinander. Dies bedeutet, daß entweder die Spritzvorrichtung bei axial stillstehendem Rohr oder das Rohr bei axial stillstehender Spritzvorrichtung in Längsrichtung bewegt wird. Die Längsbewegung erstreckt sich mindestens über die Länge des Gewindeabschnittes und besteht mindestens aus einem Hin- und Rücklauf, so daß in sehr kurzer Zeit von nur wenigen Sekunden eine Schichtdicke von 30 µm und mehr aufgespritzt werden kann. Es sind aber ohne große Schwierigkeiten auch Schichtdicken von bis zu 100 µm erreichbar. Das während des Spritzens sich drehende Rohr rotiert mit einer Geschwindigkeit von 200 bis 300 Umdrehungen pro Minute, vorzugsweise 250 Umdrehungen pro Minute, wobei der letztgenannte Wert sich auf ein Rohr mit 100 mm Durchniesser bezieht. Die Auftreffgeschwindigkeit der metallischen Tröpfchen auf die Oberfläche des Kunststoffrohres kann bis zu 150 m/sec betragen. Diese hohen Geschwindigkeiten sind erforderlich, damit es zu einer Wechselwirkung zwischen dem aufschlagenden Tröpfchen und der Oberfläche kommt, um die notwendige Haftung zu erzielen. Vorteilhaft bei der Anwendung des an sich bekannten Lichtbogen-Metallspritzens ist die trotz der im Lichtbogenbereich herrschenden hohen Temperaturen im Bereich von 3500 - 4500 Grad Celsius, vorzugsweise 4000 Grad Celsius nur geringfügige Erwärmung des Kunststoffrohres auf max. 35 Grad Celsius. Weiterhin ist von Vorteil, daß beim Spritzverfahren außer einer groben Säuberung der mechanisch hergestellten Gewindeabschnitte keine Vorbehandlung erforderlich ist. Bei Muffen bzw. bei als Muffenelement ausgebildeten Rohrenden werden speziell konstruierte Spritzvorrichtungen verwendet, die mittig geführt in das Innere der Muffe bzw. des Rohrendes geschoben werden können. Da eine solche Vorrichtung ein bestimmtes Mindestausmaß hat, ist die Anwendung des Spritzverfahrens für Muffen abmessungsmäßig nach unten hin begrenzt. Dagegen kann der als Zapfenelement ausgebildete Gewindeabschnitt bis zu den kleinsten vorstellbaren Abmessungen problemlos mit einem Überzug versehen werden. Der Auftreffwinkel ist einstellbar und wird bei der Längsbewegung der Spritzvorrichtung bzw. des Rohres dem Flankenwinkel des Gewindes angepaßt. Vorzugsweise bildet die Auftreffrichtung mit der Flankenrichtung einen rechten Winkel.

Die aufgespritzte Metallschicht ist porös, wobei die Schichtdicke vorzugsweise in einem Bereich zwischen 30 - 50 µm liegt und u. a. von der Art des aufgespritzten Metalles abhängig ist. Aufgespritzt werden Elemente oder Legierungen aus der Gruppe der duktilen Nichteisenmetalle, vorzugsweise Kupfer, Zinn oder Bronze. Als vorteilhaft hat sich herausgestellt eine Lage eines Nichteisenmetalls, vorzugsweise Kupfer aufzuspritzen. Dies ist von Bedeutung für die Bildung einer möglichst glatten aber mit Poren durchsetzten Gleitschicht. Bei der Kraftverschraubung wird die ungeordnete Oberflächenstruktur der aufgespritzten Schicht infolge der sich ergebenden plastischen Verformung eingeebnet und geglättet, wobei aber die Porigkeit substantiell erhalten bleibt. Diese verbleibenden Poren bilden dann Kammern zur Aufnahme des bei der Verschraubung verwendeten Schmiermittels, das gleichzeitig in der Regel als Dichtungsmittel dient, so daß Mehrfachverschraubungen bis zu 10 ohne weiteres möglich sind, wobei das Entschraubungsmoment nur einen Bruchteil gegenüber den unbehandelten miteinander kraftverschraubten Kunststoffrohren beträgt.

Das Verfahren ist wegen des geringen notwendigen apparativen Aufwandes leicht in eine bereits bestehende Fertigungslinie zu integrieren und erfordert außer der üblichen Absaugung unmittelbar im Spritzbereich keinerlei Aufwendungen im Hinblick auf einen vorbeugenden Umweltschutz. Das erfindungsgemäße Verfahren ist anwendbar für alle Arten von Gewindeformen, wobei aber im Hinblick auf Dichtigkeit und Belastbarkeit der Verbindung die Verwendung eines vom API-Standardgewinde abweichenden Sondergewindes sich als besonders vorteilhaft herausgestellt hat. Möglich sind auch Gewindeformen, die eine Stoßschulter als dichtendes Element enthalten.
Die Erfindung wird nachfolgend anhand der Zeichnung näher erläutert.

Es zeigen:
- Figur 1: eine schematische Darstellung einer Vorrichtung nach dem Prinzip des Lichtbogen-Metallspritzens
- Figur 2: eine Einzelheit des Aufspritzens im Gewindebereich

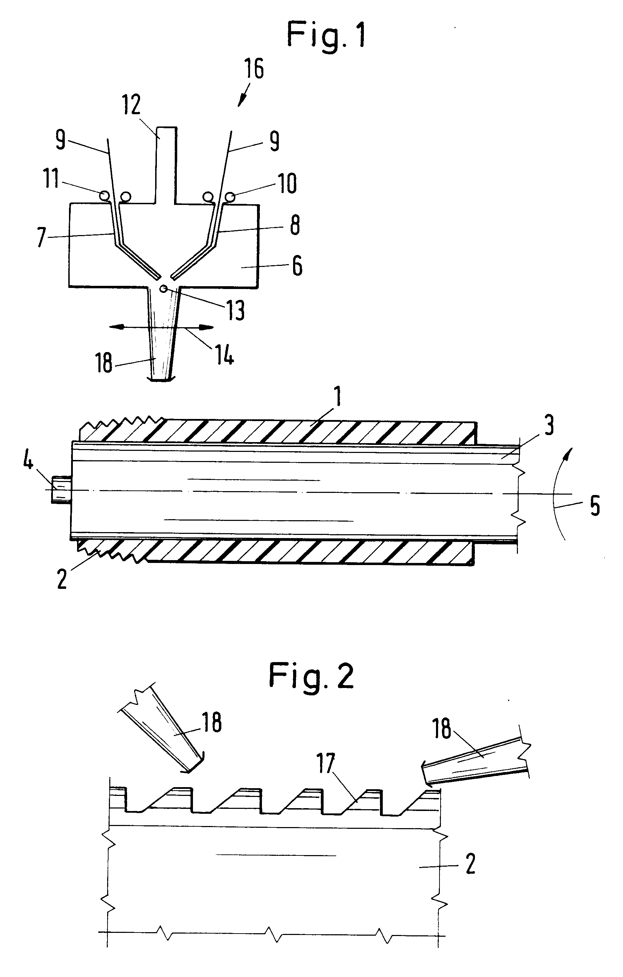

Figur 1 zeigt in einer schematischen Darstellung eine Vorrichtung zur Durchführung des erfindungsgemäßen Verfahrens hier in diesem Ausführungsbeispiel nach dem an sich bekannten Prinzip des Lichtbogen-Metallspritzens. Ein faserverstärktes Kunststoffrohr 1 weist an einem Ende einen Gewindeabschnitt 2 auf, der mit einem metallischen Überzug versehen werden soll. Dazu wird das Kunststoffrohr 1 auf einen Dorn 3 aufgestecktg der mit seinem Zapfen 4 mit einer hier nicht dargestellten Antriebseinrichtung verbunden ist. Die Rotation des Dornes 3 mitsamt dem aufgesteckten Kunststoffrohr 1 wird durch den Pfeil 5 symbolisiert. Die Spritzvorrichtung 16 besteht aus einer Spritzkammer 6 mit zwei Drahtführungen 7,8 durch die je ein Metalldraht 9 mittels eines Rollenpaares 10,11 in die Spritzkammer 6 geleitet wird. Durch Anlegen einer entsprechenden elektrischen Spannung an die beiden Drahtführungen 7,8 wird ein Lichtbogen zwischen den beiden sich berührenden Drähten 9 gezündet, so daß im Lichtbogenbereich der beiden Drähte 9 eine Temperatur von mehreren Tausend Grad erzeugt wird und das Metall bzw. die Metallegierung geschmolzen wird. Über einen Anschluß 12 wird der Spritzkammer 6 Druckluft zugeführt und der sich gebildete Tropfen 13 wird mit hoher Geschwindigkeit über die Düse 18 auf den Gewindeabschnitt 2 gespritzt. Dabei werden Auftreffgeschwindigkeiten bis zu 150 m pro Sekunde erreicht. Während des Spritzvorganges rotiert das Kunststoffrohr 1 und die Spritzvorrichtung 16 führt dabei eine Längsbewegung aus, wie hier durch den Pfeil 14 gekennzeichnet. Alternativ ist es auch möglich, daß die Spritzvorrichtung 16 stillsteht und das Kunststoffrohr 1 rotiert und gleichzeitig axial bewegt wird.

Um eine ausreichende Schichtdicke auf allen Flächen des Gewindes zu erreichen, kann, wie in Figur 2 dargestellt, der Auftreffwinkel durch Schwenken der Spritzvorrichtung 16 verändert werden. Angestrebt wird dabei ein nahezu senkrechter Winkel der Auftreffrichtung in bezug auf die Flankenrichtung des Gewindes 17 auf den Gewindeabschnitt 2. Der Abstand der Düse 18 der Spritzvorrichtung 16 zur Oberfläche des zu beschichtenden Kunststoffrohres 1 wird während des Spritzvorganges auf etwa 50 mm eingestellt. Als Uraht 9 können alle abschmelzenden Metalle bzw. Metallegierungen verwendet werden, wobei sich reines Kupfer als günstig im Hinblick auf die mit der Forderung der aggressiven Medien auftretenden Korrosionsprobleme erwiesen hat. Weiterhin bildet Kupfer, da es sehr duktil ist, bei der ersten Kraftverschraubung eine nahezu glatte Trennschicht, die aber noch ausreichend porös ist, um die Haftung des Schmiermittels zu unterstützen. Die Schichtdicken des erzeugten metallischen Überzuges liegen vorzugsweise im Bereich zwischen 30 bis 50 µm, ein Wert, der besonders günstig ist für die notwendige Kraftverschraubung der miteinander zu verbindenden Kunststoffrohre.

## Patentansprüche

1. Verfahren zum Aufbringen eines metallischen Überzuges auf die an den Enden als Zapfen- oder Muffenteil ausgebildeten Gewindeabschnitte von miteinander kraftverschraubbaren Kunststoffrohren, insbesondere mit Fasern verstärkte Kunststoffrohre,
**dadurch gekennzeichnet,**
daß auf den Gewindeabschnitt Tröpfchen eines Metalles oder einer Metallegierung mit hoher Geschwindigkeit und unter einem einstellbaren Auftreffwinkel unter Umgebungsdruck gespritzt werden, wobei während des Spritzens das Rohr bzw. die Muffe gedreht und die Spritzvorrichtung und das Rohr bzw. die Muffe dabei in Längsrichtung relativ zueinander bewegt werden.

2. Verfahren nach Anspruch 1,
**dadurch gekennzeichnet,**
daß die Längsbewegung sich mindestens über die Länge des Gewindeabschnittes erstreckt und mindestens mit einem Hin- und Rücklauf durchgeführt wird.

3. Verfahren nach Anspruch 1,
**dadurch gekennzeichnet,**
daß zum Aufspritzen ein Lichtbogen-Metallspritzen eingesetzt wird.

4. Verfahren nach Anspruch 1,
**dadurch gekennzeichnet,**
daß zum Aufspritzen ein Drahtflammspritzen eingesetzt wird.

5. Verfahren nach Anspruch 1,
**dadurch gekennzeichnet,**
daß zum Aufspritzen ein Plasmaspritzen eingesetzt wird.

6. Verfahren nach den Ansprüchen 3 bis 5,
**dadurch gekennzeichnet,**
daß eine Auftreffgeschwindigkeit der Tröpfchen mit bis 150 m/sec. eingehalten wird.

7. Verfahren nach Anspruch 3 bis 5,
**dadurch gekennzeichnet,**
daß das Aufspritzen bei einer Temperatur von 3500 - 4500 Grad Celsius, vorzugsweise bei etwa 4000 Grad Celsius durchgeführt wird.

8. Verfahren nach Anspruch 1,
**dadurch gekennzeichnet,**
daß bei der Längsbewegung der Auftreffwinkel dem Flankenwinkel des Gewindes angepaßt wird.

9. Verfahren nach Anspruch 8,
**dadurch gekennzeichnet,**
daß der Auftreffwinkel im wesentlichen senkrecht zur Flankenrichtung gehalten wird.

10. Vorrichtung zur Durchführung des Verfahrens nach einem der Ansprüche 1 - 3, 7 - 9, bestehend aus einer drehbaren Rohrhalteeinrichtung und einer eine Düse aufweisenden Lichtbogen-Metall-Spritzanlage,
**dadurch gekennzeichnet,**
daß die Richtung der Düse (18) einstellbar ist.

## Claims

1. A method for applying a metallic coating to the threaded sections, formed on the ends as pin or bushing parts, of plastic pipes which can be force-screwed together, in particular plastic pipes reinforced with fibres,
characterised in that drops of a metal or a metal alloy are sprayed onto the threaded section at high speed and at an adjustable angle of impact under ambient pressure, wherein during the spraying the pipe or the bushing is turned and the spraying device and the pipe or the bushing are thereby moved relative to one another in the longitudinal direction.

2. A method according to Claim 1, characterised in that the longitudinal movement extends at least over the length of the threaded section and is carried out at least with one forward and reverse stroke.

3. A method according to Claim 1, characterised in that an arc metal-spraying operation is used for spraying.

4. A method according to Claim 1, characterised in that a wire flame-spraying operation is used for spraying.

5. A method according to Claim 1, characterised in that a plasma spraying operation is used for spraying.

6. A method according to Claims 3 to 5, characterised in that an impact velocity of the droplets of up to 150 m/sec is maintained.

7. A method according to Claims 3 to 5, characterised in that the sprayed is effected at a temperature of 3500 - 4500 degrees celsius, preferably at about 4000 degrees celsius.

8. A method according to Claim 1, characterised in that upon the longitudinal movement the angle of impact is adapted to the flank angle of the thread.

9. A method according to Claim 8, characterised in that the angle of impact is kept substantially at right-angles to the flank direction.

10. An apparatus for performing the process according to one of Claims 1 - 3 and 7 - 9, consisting of a rotatable pipe-holding means and an arc metal-spraying installation which bears a nozzle, characterised in that the direction of the nozzle (18) is adjustable.

## Revendications

1. Procédé pour appliquer un revêtement métallique sur les tronçons filetés, réalisés aux extrémités en tant que partie de tourillon ou partie de manchon, de tubes en matière synthétique pouvant être vissés les uns aux autres à force, en particulier des tubes en matière synthétique renforcés de fibres,
caractérisé en ce que, sur le tronçon fileté, sont pulvérisées des gouttelettes d'un métal ou d'un alliage métallique à grande vitesse et sous un angle d'incidence réglable, à la pression de l'environnement, le tube ou le manchon étant tourné pendant la pulvérisation, et le dispositif de pulvérisation et le tube ou le manchon étant de plus déplacés l'un par rapport à l'autre en direction longitudinale.

2. Procédé selon la revendication 1,
caractérisé en ce que le mouvement longitudinal s'étend au moins sur la longueur du tronçon fileté et est effectué au moins avec un trajet aller et retour.

3. Procédé selon la revendication 1,
caractérisé en ce que, pour la pulvérisation, une métallisation à arc électrique est utilisée.

4. Procédé selon la revendication 1,
caractérisé en ce que, pour la pulvérisation, une métallisation au fil est utilisée.

5. Procédé selon la revendication 1,
caractérisé en ce que, pour la pulvérisation, une métallisation au plasma est utilisée.

6. Procédé selon les revendications 3 à 5,
caractérisé en ce que la vitesse d'incidence des gouttelettes est maintenue jusqu'à 150 m/s.

7. Procédé selon les revendications 3 à 5,
caractérisé en ce que la pulvérisation est réalisée à une température de 3500 à 4500°C, de préférence à environ 4000°C.

8. Procédé selon la revendication 1,
caractérisé en ce que, lors du mouvement longitudinal, l'angle d'incidence est adapté à l'angle du filetage.

9. Procédé selon la revendication 8,
caractérisé en ce que l'angle d'incidence est maintenu essentiellement perpendiculaire à la direction de l'angle du filetage.

10. Dispositif pour la mise en oeuvre du procédé selon une des revendications 1-3, 7-9, constitué d'un dispositif de maintien de tube rotatif et d'une installation de métallisation à arc électrique présentant une buse,
caracterisé en ce que la direction de la buse (18) est réglable .
